# EUROPÄISCHE PATENTSCHRIFT

(11) **EP 0 876 437 B1**
(45) Veröffentlichungstag und Bekanntmachung des Hinweises auf die Patenterteilung: **23.04.2003**
(21) Anmeldenummer: 97902207.6
(22) Anmeldetag: 23.01.1997
(51) Int. Cl.: C09J 101/26, C09J 103/00, C09J 103/08, C09J 9/00, C08J 9/28

(54) **VERFAHREN ZUR HERSTELLUNG EINES PORÖSEN FORMTEILS**
PROCESS FOR PREPARING A POROUS SHAPED PART
PROCEDE POUR PRODUIRE UNE PIECE MOULEE POREUSE

(30) Priorität: 25.01.1996 DE 19602508
(43) Veröffentlichungstag der Anmeldung: 11.11.1998
(73) Patentinhaber: Henkel Kommanditgesellschaft auf Aktien, 40589 Düsseldorf-Holthausen (DE)
(72) Erfinder: WITT, Sandra, D-40764 Langenfeld (DE); HALLER, Werner, D-40699 Erkrath (DE); SCHÖTTMER, Bernhard, D-40789 Monheim (DE)
(86) Internationale Anmeldenummer: EP9700309
(87) Internationale Veröffentlichungsnummer: WO97027258

(56) Entgegenhaltungen:
- DE-A- 4 200 188

## Beschreibung

Die Erfindung betrifft ein Verfahren zur Herstellung eines porösen Formteils gemäß Oberbegriff von Anspruch 1 und die Verwendung des so hergestellten Formteils.

Derartige Formteile sind bekannt. So wird in der DE 31 03 338 vorgeschlagen, schnellösliche Kleister dadurch herzustellen, daß man sehr feinverteilten, faktisch pulverförmigen, wasserlöslichen Celluloseethern in einem Granulator Wasser zusetzt, um die Korngröße der Teilchen zu erhöhen. Gewöhnlich wird diesen sehr feinverteilten Teilchen Feuchtigkeit in der Menge von ca. 40 % zugesetzt, wonach diese granuliert und gewöhnlich bis zu einem Restfeuchtigkeitsgehalt von ca. 10 % getrocknet werden. Diese granulierten Celluloseether können mit Hilfe einer Tablettenpresse tablettiert werden. Die Tabletten haben einen Durchmesser von 25 mm. Ihr Rand ist kompakt.

In der DE 42 00 188 wird ebenfalls ein Tapetenklebstoff in Form von gepreßten Tabletten beschrieben. Die Tabletten bestehen im wesentlichen aus einem wasserlöslichen klebenden Polymer und einem in Anwesenheit von Wasser unter Freisetzung eines Gases reagierenden Produktes. Unter dem klebenden Polymer sind konkret folgende Stoffe zu verstehen: Cellulosederivate wie Methyl-, Carboxymethyl-, Hydroxyethylmethyl-, Ethylhydroxyethyl- und Hydroxypropylmethyl-Cellulose, Stärke und modifizierte Stärke. Das unter Gasbildung reagierende Produkt besteht vorzugsweise aus zwei Komponenten, nämlich einer Säure, wie Zitronen-, Amidosulfon- und Weinsäure einerseits, sowie einem Carbonat andererseits, insbesondere einem Alkalibicarbonat. Die Tablette wird mit einer Preßkraft von höchstens 10 000 N/cm² verpreßt. Sie ist so groß, daß beim Mischen mit einem Wasservolumen von 200 ml bis 5 l ein Tapetenklebstoff von zufriedenstellender Qualität entsteht.

In der EP 0 311 873 wird ein Verfahren zur Herstellung eines als Kleisterbasis geeigneten Trockenproduktes in Schuppen- oder Granulatform beschrieben, wobei eine 30 bis 80 Gew.-% enthaltende Mischung von 30 bis 95 Gew.-% carboxy-methylierter und/oder alkoxylierter Stärke, 3 bis 40 Gew.-% Celluloseether und 2 bis 40 Gew.-% in Wasser dispergierbaren Polymeren bzw. wasserlöslichen Polymeren in an sich bekannter Weise in dünner Schicht auf Flächen durch Erhitzen auf 80 bis 200 °C getrocknet werden. Bevorzugt wird die Trocknung auf Walzen bzw. Bandtrocknern vorgenommen, wobei die Trocknungsenergie durch Dampf bzw. IR-Heizung oder Mikrowellen zugeführt wird. Nach der Trocknung wird das Produkt auf die gewünschte Feinheit gemahlen. Die Kornverteilung beträgt dann in etwa: > 2,0 mm ca. 15 %, > 1,25 mm ca. 45 %, > 0,8 mm ca. 25 %, 0,4 mm ca. 12 % und 0,4 mm maximal 3 %. Bei einer elektronenmikroskopischen Vergrößerung von 50 bis 250 : 1 ist eine Schwammstruktur erkennbar. Eine Seite des Teilchen zeigt eine Naturschwamm-ähnliche Struktur, die andere Seite ist weitgehend glatt und ebenfalls kompakt.

In der W0 90/12838 wird ein rieselfähiges, feinteiliges Trockenpulver auf der Basis einer wasserlöslichen und/oder wasserquellbaren Kombination von nichtionogenen Celluloseethern und getrockneten Redispersionspolymeren beschrieben. Dieses Trockenpulver ist gekennzeichnet durch eine Kornstruktur, die geschlossene Kerne der nichtionogenen Celluloseether aufweist, die von einer Hülle des Redispersionspolymeren umfaßt und mit dieser haftfest verbunden sind. Zur Herstellung des Trockenpulvers mischt man die nichtionogenen Celluloseether als Pulver mit der wäßrigen Polymerdispersion und unterwirft diese wäßrige Mischung mit einem Festkörpergehalt von etwa 15 bis 60 Gew.-% einer Sprühtrocknung. Das dabei erhaltene feinkörnige Trockenprodukt hat eine Korngröße von 50 bis 500 µm. Diese Teilchen können sich zu Agglomeraten zusammenlagern.

Generell haben die bekannten Tapetenkleister in Tablettenform mehr oder weniger folgende Nachteile:
1. Verlust der Instant-Eigenschaften bei Aufschlußzeiten in der Größenordnung von etwa 1 Stunde.
2. Reduktion der Ergiebigkeit, da die Viskosität um bis zu 30 % geringer ist, verglichen mit der nicht-tablettierten Ware.
3. Stark Quellkörper-haltige Flotte, hervorgerufen durch nicht mehr voll aufschließende Methylcellulose-Teilchen.
4. Ein klumpenfreies Anrühren ist kaum möglich, da schon bei einer Tablette von 2,5 g intensiv gerührt werden muß und bei ca. 5 Tabletten für 4 Liter Flotte das praktisch nicht mehr möglich ist.
5. Um die notwendige Sprengwirkung für die Tablette zu erhalten, sind ca. 30 bis 50 % der Tablette Salze.
6. Eine Formulierung eines Spezialkleisters ist unmöglich, da unter dem Tablettierdruck das Redispersionspulver weitgehend irreversibel verfilmt und somit unlöslich wird.

Die erfindungsgemäße Aufgabe bestand darin, die geschilderten Nachteile zu vermeiden und ein Trockenprodukt zur Herstellung von wäßrigen Bindemittelsystemen, insbesondere von Kleistern bereitzustellen, das sich nicht entmischt, staubfrei ist, in H₂O zerfällt und sich klumpenfrei in Wasser innerhalb üblicher Zeiten unter möglichst geringem Rühren auflöst.

Die erfindungsgemäße Lösung ist den Patentansprüchen zu entnehmen (s. Patentansprüche).

Der Rand des erfindungsgemäß hergestellten Formteiles ist praktisch ebenso porös wie sein Inneres. Daher können Flüssigkeiten, insbesondere Wasser, ungehindert eindringen.

Aufgrund dieses weitgehend offenen Porensystems wird der Formkörper praktisch gleichzeitig sowohl von innen als auch von außen vom Wasser gelöst.

Das Porensystem ist also vorzugsweise homogen, d.h., die Poren sind gleichmäßig über das Formteil verteilt. Bei elektronenmikroskopischer Betrachtung ist der Rand des Formteiles nicht merklich dichter als seine Mitte.

Unter einem Formteil wird ein gestaltetes, insbesondere regulär gestaltetes Erzeugnis verstanden, welches durch Formgebung einer Formmasse erhalten wurde. Im vorliegenden Falle besteht die Formmasse aus den Stoffen zur Herstellung von Kleister sowie Wasser.

Die Stoffe zur Herstellung der wäßrigen Bindemittelsysteme, insbesondere der Kleister bestehen im wesentlichen aus Bindemitteln und Hilfsmitteln. Als Bindemittel kommt zumindest einer der folgenden wasserlöslichen bzw. wasserdispergierbaren Stoffe in Frage, insbesondere wenn ein Kleister hergestellt werden soll:
a) wasserlösliche bzw. wasserquellbare Stärke und/oder Stärkederivate,
b) Celluloseether und
c) vollsynthetische Vinylpolymere und / oder Polyacrylate.

Unter "wasserlöslicher bzw. wasserquellbarer Stärke" ist insbesondere modifizierte Stärke zu verstehen, wobei die Modifikation durch physikalische oder geringe chemische Einwirkung zustande kommt. Konkrete Beispiele sind: partiell abgebaute Stärke und Quellstärke.

Unter einem "wasserlöslichen bzw. wasserquellbaren Stärkederivat" ist ein Stärkeester oder ein Stärkeether zu verstehen, insbesondere carboxylierte und alkoxylierte Stärken.

Als carboxylierte und/oder alkoxylierte Stärken eignen sich sämtliche entsprechend modifizierten natürlichen Stärketypen aus Kartoffeln, Mais, Weizen, Reis, Milo, Tapioka und dergleichen, wobei Derivate auf Basis von Kartoffeln und/oder Maisstärke bevorzugt sind. Die brauchbaren Stärkederivate weisen einen Carboxylierungsgrad von 0,1 bis 2,0 (DS) oder einen Alkoxilierungsgrad von 0,05 bis 1,5 (MS) auf. Die Stärkederivate können auch vernetzt sein. Als Vernetzungsmittel eignen sich difunktionelle Verbindungen. Derartige Vernetzungsmittel sind bekannt (siehe z.B. EP 0 311 873 B1, Seite 3, ab Zeile 49 bis Seite 4, Zeile 5.).

Als Celluloseether eignen sich insbesondere folgende Typen:
CMC, CMMC, EC, HBC, HBMC, HEC, HECMC, HEEC, HPC, HPCMC, HPMC, HEMC, MHEC, MC und PC, wobei Carboxymethylcellulose CMC, Methylcellulose MC und Methyl-Hydroxypropyl-Cellulose HPMC bevorzugt sind. Das gilt insbesondere für die Alkalisalze der CMC und die leicht ethoxylierte MC. Auch die Cellolosederivate können leicht vernetzt sein, damit sie bei einem pH-Wert von über 8 löslich sind und die Lösung in Wasser verzögert wird. Die Vernetzung kann durch Glyoxal-Additionen erfolgen. Um einen pH-Wert von mindestens 8 in der Lösung nach dem Lösen zu gewährleisten, sollte ein Überschuß der basischen Komponente gegenüber der Säurekomponente vorliegen. Vorzugsweise liegt der pH-Wert in einem Bereich zwischen 8 und 9,5.

Bei den vollsynthetischen Polymeren handelt es sich um redispergierbare Dispersionspulver folgender Homo- und Copolymerisate: Vinylester-, Styrol-, Acrylat- und Vinylchlorid-Polymerisat: Als Basispolymerisat geeignete Vinylester-Polymerisate sind zu nennen: Vinylacetat-Homopolymere; Copolymere des Vinylacetats mit Ethylen und/oder Vinylchlorid und/oder weiteren Vinylestern, wie Vinyllaurat, Versaticsäurevinylestern, Vinylpivalat und/oder Estern von Maleinsäure/Fumarsäure; oder Homopolymerisate von Vinylestern von gesättigten C₃- bis C₈-Alkylcarbonsäuren oder deren Copolymerisate mit Ethylen, Vinylchlorid und/oder weiteren Vinylestern. Die (Meth)Acrylat- und/oder Styrol-(Co)-Polymerisate leiten sich ab von Polymerisaten aus Styrol und/oder Estern der Acrylsäure und/oder Methacrylsäure (hier als (Meth)Acrylat bezeichnet) mit geradkettigen, verzweigten oder cyclischen aliphatischen Alkoholen mit 1 bis 20 C-Atomen. Weitere Styrol-(Co)-Polymerisate können Styrol-Butadien-Copolymerisate sein. Als Vinylchlorid-Polymerisate sind Vinylchlorid-Ethylen-Copolymere geeignet.

Vorzugsweise eingesetzt werden Vinylacetat-Homopolymere, Vinylacetat-Ethylen-Copolymere oder Copolymere von Vinylestern von gesättigten C₃- bis C₈-Alkylcarbonsäuren und Ethylen mit einem Ethylengehalt von 1 bis 40 Gew.-% Ethylen und 0 bis 40 Gew.-% weiterer Vinylester aus der Gruppe der Vinylester von gesättigten C₃- bis C₈-Alkylcarbonsäuren und/oder Vinylchlorid; Styrol-Acrylate wie Styrol-Butylacrylat oder Styrol-Ethylhexyacrylat mit einem Styrolgehalt von 1 bis 70 Gew.-%. Dieser redispergierenden Polymerisate werden üblicherweise durch Sprühtrocknung von Polymerdispersionen in Sprühtürmen hergestellt.

Die Bindemittel können allein, mit Ausnahme der Dispersionspulver, oder in Kombination eingesetzt werden. Als alleiniges Bindemittel eignet sich insbesondere Celluloseether und die genannten Stärkederivate. Für eine Kombination aus zwei Bindemitteln eignen sich insbesondere die Cellulosederivate und die Stärkederivate mit den redispergierbaren Polymeren.

Als Hilfsmittel werden Stoffe eingesetzt, um den Bindemitteln bestimmte Eigenschaften entsprechend dem Verwendungszweck zugeben, z.B. Konservierungsmittel, Netzmittel, Füllstoffe, Sprengmittel, Trennmittel und dergleichen. Konkrete Stoffe sind: z.B. Polysaccharide wie Cellulose oder Stärke, Superabsorber, Kieselsäure, Talk, Kaolin, Kreide, Dextrin, Wasserglas, Zucker usw..

Diese Stoffe zur Herstellung von Kleister werden in Pulverform verwendet, wenn es sich dabei um feste Stoffe handelt. Ihre Korngröße sollte im Bereich von 0,01 bis 3 mm, insbesondere im Bereich von 0,4 bis 3 mm liegen.

Die Formteile können nahezu jegliche geometrische Form besitzen. Bevorzugt ist die Zylinderform. Darüber hinaus sind aber auch die Kugelform, die Quaderform oder andere dreidimensionale geometrische Formen brauchbar. Bevorzugt werden Formteile mit einer geometrischen Form, die in ihrem Innern mindestens einen hypothetischen Kubus mit einer Kantenlänge von 2,5 mm beinhalten kann. Besonders bevorzugt sind Formteile mit einem Gewicht von 0,5 bis 500, insbesondere von 10 bis 200 Gramm. Wenn das Formteil Kerben wie z.B. eine Schokoladentafel enthält, sollten die Bruchteile ein Gewicht von mindestens 1 Gramm haben.
Es fallen also keine Granulate in den Schutzbereich.

Die Formteile werden im allgemeinen folgendermaßen hergestellt:
a) Man mischt die pulverförmigen Stoffe zur Herstellung des Kleisters mit 5 bis 40, insbesondere 10 bis 20 Gew.-% Wasser und/oder bis zu 15 Gew.-% eines hydratwasserhaltigen Salzes, insbesondere bis zu 12 Gew.-% dieses Salzes, bezogen auf die Mischung insgesamt. Bei den hydratwasserhaltigen Salzen handelt es sich vor allem um die Na- und K-Salze von Sulfaten, Phosphaten, Hydrogenphosphaten, Dihydrogenphosphaten, Carbonaten, Boraten, Silicaten und Acetaten. Man mischt so lange, bis ein sichtlich einheitliches Gemenge entsteht. Ein Teil der Stoffe kann auch zunächst compoundiert werden, bevor die restlichen Stoffe zugemischt werden.
b) Diese Mischung wird in einem Formwerkzeug zu Rohlingen geformt. Dabei kann es notwendig sein, einen Druck von mehr als 0,2 N/cm², vorzugsweise 2 oder mehr N/cm² anzuwenden. Das Formwerkzeug kann auch ein Teil der Verpackung sein.
c) Die so erhaltenen Rohlinge werden durch Erwärmen schonend verfestigt. Zweckmäßig ist es, die Rohlinge so zu erwärmen, daß die Bildung von Kontaktstellen zwischen den Pulverkörnern bei Erhalt der Porenstruktur der Rohlinge erreicht wird, ohne daß die Stärke- und Cellulose-Derivate verhornen oder die Redispersions-Polymer-Pulver verfilmen. Als Heizquelle kommt neben konventionellen Heiztechniken wie warmer Luft, Wasserdampf, IR-Strahlung etc. vor allem die Mikrowellenstrahlung in Frage, und zwar im Frequenzbereich von 3 bis 300 000 MHz. Dieser Frequenzbereich enthält also neben dem eigentlichen Mikrowellenbereich von mehr als 300 MHz auch den Radiowellenbereich von 3 bis 300 MHz. Zur Verfestigung wird eine rezepturspezifische Hochfrequenzleistung von maximal 1 000, vorzugsweise weniger als 400 und vor allem weniger als 200 W/kgh verwendet. Es können auch mehrere Energiequellen gleichzeitig oder nacheinander auch in Kombination mit Vakuum zur besonders schonenden Behandlung, verwendet werden. Der Rohling kann sich auch beim Erwärmen noch in dem Formwerkzeug befinden, vor allem dann, wenn dieses als Verpackung dient. Es sollte jedoch dann zumindest einseitig offen sein. Es sind auch vollständig geschlossene Behälter verwendbar, sofern diese ausreichend perforiert sind, um einen Wasseraustritt ohne Materialaustritt zu ermöglichen.
d) Schließlich wird das getrocknete Formteil entformt, falls das Formwerkzeug nicht als Verpackung dient.

Die Herstellung der Formkörper kann entweder im Batch-Betrieb oder kontinuierlich mit Hilfe einer Bandanlage erfolgen.

Die Formteile ergeben mit Wasser eine klumpenfreie wäßrige Lösung bzw. Dispersion. Dabei handelt es sich vorzugsweise um einen Kleister, also einen Klebstoff in Form eines wässrigen Quellungsproduktes, das schon bei relativ niedriger Feststoffkonzentration eine hochviskose, nicht fadenziehende Masse bildet. Diese Kleister eignen sich vorzugsweise zum Verkleben von Tapeten und Wandbelägen. Aber auch andere wäßrige Klebstoffe können so hergestellt werden. Die Formteile eignen sich - bei entsprechender Zusammensetzung - auch zur Herstellung von klumpenfreien Grundierungen für mineralische Untergründe wie Putz, Estrich oder Beton an Wänden, Decken und Böden. Die so verfestigte Oberfläche wird in der Regel anschließend beschichtet, z.B. mit Farbe, mit einer Spachtelmasse oder mit einem Klebstoff.

Zur Herstellung des Kleisters geht man zweckmäßigerweise folgendermaßen vor:
a) Die Formteile werden unter Rühren zu dem vorgelegten Wasser gegeben.
b) Beides wird weiter gerührt, bis sich die Formteile aufgelöst haben.

So wird ein klumpenfreier, homogener Kleister erhalten. D. h., der Kleister enthält keine trockenen Bestandteile des Formteiles.

Gegenüber einem Kleister, der direkt aus den pulverförmigen Stoffen hergestellt wurde, zeigt der erfindungsgemäß hergestellte Kleister praktisch keine Veränderung in gebrauchswichtigen Eigenschaften wie: Viskosität, Naßklebkraft und Trockenklebkraft.

Die weiteren Vorteile der Erfindung sind: Kein Stauben beim Ansetzen des Kleisters und keine Entmischung der Kleisterbestandteile im Paket.

Die Erfindung wird an folgenden Beispielen im einzelnen erläutert:
Gegenüber den bekannten, durch Druck erzeugten Formteilen mit einer kompakten äußeren Schicht zeichnet sich das erfindungsgemäße Formteil durch seine klumpenfreie Verarbeitbarkeit aus. Überraschenderweise ist auch ohne kompakte äußere Schicht die Druckfestigkeit für eine Lagerung und Verarbeitung mit > 20 N, insbesondere > 40 N und vor allem mit < 60 N ausreichend hoch.

### Beispiel 1

30 Gramm eines Gemisches aus 75 Gew.-% Carboxymethylstärke-Na-Salz, (schuppenförmig) 10 Gew.-% an pulverförmigem Sorbit und 5 Gew.-% Wasser werden in eine Glasform eingefüllt und 10 Sekunden mit einem Druck von 10 N/cm² verpreßt. Die gefüllte Glasform wird für 15 Minuten in einen auf 120 °C temperierten Trockenschrank gestellt.
Die so erhaltene Tablette ist stabil und löst sich in Leitungswasser von Raumtemperatur in 3 Minuten klumpenfrei auf. Die wäßrige Lösung (Ansatzverhältnis 1 : 32) hatte eine Viskosität von 10000 mPas bei 20 °C (Brookfield RVT). Die pulverförmige Klebstoff Zusammensetzung ergab die gleiche Viskosität.

### Beispiel 2

2 mal 20 Gramm der gleichen Zusammensetzung wie in Beispiel 1 wurden in ein mikrowellengeeignetes Gefäß (z.B. Glas, Polypropylen) gefüllt und in einem Mikrowellenlaborsystem MLS 1200 der Firma MLS mit einer Frequenz von 2450 MHz für die Dauer von 2 Minuten mit Mikrowellen bestrahlt. Die eingestellte Leistung betrug 250 Watt.
Es wurde das gleiche Lösungsverhalten festgestellt wie in Beispiel 1.
Die Druckfestigkeit betrug 43 N, gemessen mit einem SCHLEUNIGER-Tablettenhärte-Prüfgerät, Modell 6 D.

### Beispiel 3

Wiederholt man Beispiel 2 unter Verwendung von 7,3 und 12,0 Gew.-% Wasser, so erhält man vergleichbare Ergebnisse.

### Beispiel 4

Es wird eine Mischung aus 50 Gew.-% Methylcellulose 30 Gew.-%, Polyvinylacetat-Dispersions-Pulver und jeweils 10 Gew.-% an Wasser und Hilfsstoffen hergestellt. Wie in Beispiel 2 werden 2 mal 20 Gramm einer solchen Mischung mit Mikrowellen bestrahlt.

Es wurden mechanisch sehr feste Formteile erhalten. Die Druckfestigkeit betrug 78 N, gemessen mit einem SCHLEUNIGER-Tablettenhärte-Prüfgerät, Modell 6 D.
Das Lösungsverhalten war auch hier einwandfrei.
Die klebetechnische Untersuchung zeigte eine einwandfreie Trocken- und Naßklebkraft.

Die Beispiele zeigen, daß durch eine schonende und kurzfristige Erwärmung der Bindemittel für Kleister für die Handhabung ausreichend stabile Formteile hergestellt werden können. In ihrem Lösungsverhalten und ihren klebetechnischen Eigenschaften unterscheiden sie sich praktisch nicht von der entsprechenden Zusammensetzung in Pulverform.

## Patentansprüche

1. Verfahren zur Herstellung eines porösen Formteils mit porösen Rändern aus Stoffen zur Herstellung eines wäßrigen Bindemittelsystems, **dadurch gekennzeichnet, daß** man
a) die pulverförmigen Stoffe zur Herstellung des Kleisters mit 5 bis 40 Gew.-% Wasser und/oder bis zu 15 Gew.-% eines hydratwasserhaltigen Salzes, bezogen auf die Mischung mischt,
b) die Mischung in einem Formwerkzeug zu Rohlingen formt,
c) die Rohlinge durch Erwärmen schonend verfestigt, so daß die Bildung von Kontaktstellen zwischen den Pulverkömem bei Erhalt der Porenstruktur der Rohlinge erreicht wird, ohne daß die Stärke- und Cellulosederivate verhomen oder die Redispersions-Polymer-Pulver verfilmen.

2. Verfahren nach Anspruch 1, **dadurch gekennzeichnet, daß** der Rand des Formteils porös ist wie sein Inneres.

3. Verfahren nach Anspruch 1, **gekennzeichnet durch** das Gewicht des Formteils von 0,5 bis 500, insbesondere 10 bis 200 Gramm.

4. Verfahren nach Anspruch 1, **gekennzeichnet durch** die Zylinderform des Formteils mit einem Volumen von mindestens 5 cm³.

5. Verfahren nach Anspruch 1, **dadurch gekennzeichnet, daß** die Druckfestigkeit des Formteils mehr als 20 N beträgt.

6. Verfahren nach Anspruch 1, **gekennzeichnet durch** mindestens einen der folgenden wasserlöslichen bzw. wasserdispergierbaren Stoffe als Bindemittel für Kleister:
a) wasserlösliche bzw. wasserquellbare Stärke und/oder Stärkederivate,
b) Celluloseether und
c) vollsynthetische Vinylpolymere und/oder Polyacrylate in Form von redispergierbaren Dispersionspulvern.

7. Verfahren nach Anspruch 1, **dadurch gekennzeichnet, daß** man die pulverförmigen Stoffe zur Herstellung des Kleisters mit 10 bis 20 Gew.-% Wasser und/oder bis zu 12 Gew.-% eines hydratwasserhaltigen Salzes, bezogen auf die Mischgung, mischt.

8. Verfahren nach Anspruch 1, **dadurch gekennzeichnet, daß** man zunächst die pulverförmigen Stoffe mischt und dann das Wasser hinzu gibt.

9. Verfahren nach Anspruch 1, **dadurch gekennzeichnet, daß** man die Mischung mit einem Druck von mehr als 0,2 N/cm² zu Rohlingen formt.

10. Verfahren nach Anspruch 1, **dadurch gekennzeichnet, daß** man mit Mikrowellen erwärmt.

11. Verfahren nach Anspruch 10, **dadurch gekennzeichnet, daß** man mit die Bestrahlung mit einer rezepturspezifischen Hochfrequenzleistung von maximal 1000 W/kgh, vorzugsweise weniger als 400 W/kgh und ganz besonders bevorzugt weniger als 200 W/kgh durchführt.

12. Verfahren nach Anspruch 10, **dadurch gekennzeichnet, daß** man die Mikrowellenbestrahlung in Kombination mit konventionellen Heiztechniken und/oder Vakuum durchführt.

13. Verfahren nach Anspruch 1, **dadurch gekennzeichnet, daß** man die Rohlinge mittels konventioneller Heiztechniken erwärmt, und zwar für 5 bis 180 Minuten, vorzugsweise für 10 bis 90 Minuten.

14. Verwendung der Formteile, hergestellt nach mindestens einem der Ansprüche 1 bis 13, zur Herstellung von Kleister, insbesondere Tapetenkleister.

## Claims

1. A process for the production of a porous-edged moulding of substances for the preparation of an aqueous binder system, **characterized in that**
a) the powder-form substances for preparing the paste are mixed with 5 to 40% by weight of water and/or up to 15% by weight of a salt containing water of hydration, based on the mixture,
b) the mixture is introduced into a mould and converted into blanks,
c) the blanks are carefully solidified by heating so that contact points are formed between the grains of powder without any effect on the porous structure of the blanks and without the starch and cellulose derivatives becoming homy or the redispersion polymer powder forming a film.

2. A process as claimed in claim 1, **characterized in that** the edge of the moulding is as porous as its interior.

3. A process as claimed in claim 1, **characterized by** a weight of the moulding of 0.5 to 500 g and, more particularly, 10 to 200 g.

4. A process as claimed in claim 1, **characterized by** a cylindrical shape of the moulding with a volume with at least 5 cm³.

5. A process as claimed in claim 1, **characterized in that** the moulding has a compressive strength of more than 20 N.

6. A process as claimed in claim 1, **characterized by** at least one of the following water-soluble or water-dispersible substances as binder for pastes:
a) water-soluble or water-swellable starch and/or starch derivatives,
b) cellulose ethers and
c) fully synthetic vinyl polymers and/or polyacrylates in the form of redispersible dispersion powders.

7. A process as claimed in claim 1, **characterized in that**, to prepare the paste, the powder-form substances are mixed with 10 to 20% by weight of water and/or up to 12% by weight of a salt containing water of hydration, based on the mixture.

8. A process as claimed in claim 1, **characterized in that** the powders are first mixed and the water is then added.

9. A process as claimed in claim 1, **characterized in that** the mixture is moulded to blanks under a pressure of more than 0.2 N/cm².

10. A process as claimed in claim 1, **characterized in that** the mouldings are heated by microwaves.

11. A process as claimed in claim 10, **characterized in that** the microwave treatment is carried out with a formulation-specific highfrequency power of at most 1000 W/kgh, preferably less than 400 W/kgh and more preferably less than 200 W/kgh.

12. A process as claimed in claim 10, **characterized in that** the microwave treatment is carried out in combination with conventional heating techniques and/or vacuum.

13. A process as claimed in claim 7, **characterized in that** the blanks are heated by conventional heating techniques for 5 to 180 minutes and preferably for 10 to 90 minutes.

14. The use of the mouldings claimed in at least one of claims 1 to 6 for the preparation of paste, more particularly wallpaper paste.

## Revendications

1. Procédé de production d'un article moulé poreux comportant des bords poreux fait de matériaux pour la production d'un système de liant aqueux,
**caractérisé en ce que**
a) on mélange les matériaux pulvérulents pour produire l'empois avec de 5 à 40 % en poids d'eau et/ou jusqu'à 15 % en poids d'un sel contenant de l'eau d'hydratation, par rapport au mélange au total,
b) on forme le mélange en ébauches dans un outil de formage,
c) on solidifie de façon douce les ébauches en les chauffant, de manière à obtenir la formation d'endroits de contact entre les grains de poudre avec maintien de la structure poreuse des ébauches, sans que les dérivés d'amidon et de cellulose ne se transforment en grains ni que la poudre de polymère de redispersion ne se transforme en pellicule.

2. Procédé selon la revendication 1,
**caractérisé en ce que**
le bord de l'article moulé est poreux comme son intérleur.

3. Procédé selon la revendication 1,
**caractérisé par**
un poids de l'article moulé de 0,5 à 500, en particulier de 10 à 200 g.

4. Procédé selon la revendication 1,
**caractérisé par**
la forme cylindrique de l'article moulé avec un volume d'au moins 5 cm³.

5. Procédé selon la revendication 1,
**caractérisé en ce que**
la résistance à la compression de l'article moulé est supérieure à 20 N.

6. Procédé selon la revendication 1,
**caractérisé par**
au moins l'un des matériaux solubles dans l'eau ou selon les cas dispersables dans l'eau suivants comme liants pour empois :
a) amidon et/ou dérivé d'amidon soluble dans l'eau ou selon les cas gonflable à l'eau,
b) éthers de cellulose et
c) polymères vinyliques entièrement synthétiques et/ou polyacrylates sous forme de poudres de dispersions redispersables.

7. Procédé selon la revendication 1,
**caractérisé en ce qu'**
on mélange les matériaux pulvérulents, pour la production de l'empois, avec de 10 à 20 % en poids d'eau, et/ou jusqu'à 12 % en poids d'un sel contenant de l'eau d'hydratation, par rapport au mélange.

8. Procédé selon la revendication 1,
**caractérisé en ce qu'**
on mélange tout d'abord les matériaux pulvérulents puis **en ce qu'**on y ajoute l'eau.

9. Procédé selon la revendication 1,
**caractérisé en ce qu'**
on forme le mélange à une pression supérieure à 0,2 N/cm² pour obtenir des ébauches.

10. Procédé selon la revendication 1,
**caractérisé en ce qu'**
on chauffe avec des micro-ondes.

11. Procédé selon la revendication 10,
**caractérisé en ce qu'**
on procède avec l'irradiation à une puissance de haute fréquence spécifique de la composition, d'au maximum 1000 W/kgh, de préférence moins de 400 W/kgh et de façon tout particulièrement préférée moins de 200 W/kgh.

12. Procédé selon la revendication 10,
**caractérisé en ce qu'**
on procède à l'irradiation par micro-ondes en combinaison avec des techniques de chauffage classiques et/ou un vide.

13. Procédé selon la revendication 1,
**caractérisé en ce qu'**
on chauffe les ébauches au moyen de techniques classiques de chauffage, et cela pendant 5 à 180 minutes, de préférence pendant 10 à 90 minutes.

14. Utilisation des articles moulés produits selon au moins une des revendications 1 à 13 pour la production d'empois, en particulier d'empois pour moquettes.
